# EUROPEAN PATENT APPLICATION

(11) **EP 3 882 054 A1**
(43) Date of publication of application: **22.09.2021**
(21) Application number: 21020136.4
(22) Date of filing: 10.03.2021
(51) Int. Cl.: B60C 25/05, B60C 25/138

(54) **TOOL FOR TIRE CHANGER MACHINE**

(30) Priority: 11.03.2020 IT 202000005197
(71) Applicant: Ferrari, Gino, 42015 Correggio (RE) (IT); Maioli, Franco, 42015 Correggio (Reggio Emilia) (IT)
(72) Inventor: Ferrari, Gino, 42015 Correggio (RE) (IT); Maioli, Franco, 42015 Correggio (Reggio Emilia) (IT)
(74) Representative: GCA S.R.L.

(57) **Abstract**

The tool (1; 20) for tire-changing machines (2) has a body (3) that includes: a joint (5) to an operating end of an operating arm (7) of a tire-changing machine; a feeler pin (12) resting on one edge (9) of a rim (10) which is fixed with blocking means on a rotating platform of a tire-changing machine; said body further comprises at least one finger (11) which protrudes towards said rotating platform and intended to be operatively introduced transversely between an edge (9) of the rim (10) and a bead (13) of a tire (14) mounted or to be mounted on the rim (10).

## Description

### FIELD OF THE INVENTION

The invention concerns a tool for tire-changing machines, generally usable to remove tires from, and mount them onto, the rims of vehicle wheels.

### BACKGROUND OF THE INVENTION

Known tire-changing machines comprise a base on which a rotating platform or so-called self-centering chuck is supported, on which the wheels of vehicles are temporarily disposed and blocked, for the time necessary to remove tires from and mount them onto the rims of vehicle wheels.

A turret, generally vertical, rises from the base and supports cantilevered a horizontal operating arm which is equipped with a terminal on which tools can be mounted or removed to allow the tire specialists to perform operations on the wheels.

In particular, the operating arm is equipped at one free end with a so-called vertical post facing toward the self-centering chuck which, in turn, at the lower end is equipped with the terminal, that is, with a standardized quick joint that allows to mount and remove the tools normally used by the tire specialists in carrying out their daily work.

Typically, the tool which is mounted on the lower end of the post of the operating arm comprises a body which shapes a hub facing toward the quick joint and which has a profile which can be removably coupled with the latter, a feeler pin protruding from the hub and intended to rest on one edge of a rim to function as a reference for the operating arm and a slide profile which is intended to be surmounted by a tire bead to be extracted from the central channel of the rim, during the rotation of the self-centering chuck.

In particular, the bead of the tire is first lifted manually by the tire specialist with a suitable lever in one section and the raised section is rested on the slide profile.

Subsequently, the tire specialist makes the self-centering chuck rotate, and the entire circumference of the bead progressively slides on the slide profile, progressively and completely passing over the rim edge and finally exiting from the central channel of the latter towards the outside.

To mount a tire on the rim, the tire specialist blocks it on the self-centering chuck and manually inserts a bead of the deflated tire into the central channel of the self-centering chuck, and then forces the other bead by pressing it with a tool mounted on the post of the operating arm, while simultaneously rotating the self-centering chuck.

In this way, the second bead also passes over the edge of the rim and is disposed inside the central channel.

In this condition, the tire is ready to be inflated.

This state of the art has some disadvantages.

One disadvantage is that, in the tire removal step when the bead surmounts the slide profile, it exerts a significant force on the latter which is transmitted to the entire tool which is very close to the rim.

During the rotation drive of the self-centering chuck, the tool, being pressed with force towards the rim by the deformed bead, risks coming into contact with the rim and damaging its surface due to relative movements that can occur between the parts in contact, specifically between the rim and the feeler pin of the tool, due to the pressure force exerted by the deformed bead of the tire.

It must be remembered that the tools used by tire specialists are all made of metal and have a very robust structure to be able to support the mechanical stresses to which they are subjected, while the rims of the vehicles, above all special ones made of light aluminum alloys, are easily damaged by impacts and abrasions.

Another disadvantage is that, to pass over the slide profile, the tire beads have to be deformed, although elastically and temporarily, in a forced manner and in directions that are in contrast with the elements (including metal ones) that make up the structure of the tires, especially of the beads.

These induced deformations, if pushed to high values, can damage the structure of the tire due to the high tensile stresses to which the beads are subjected, which all in all makes the tires unsafe for use.

### PURPOSES OF THE INVENTION

The purpose of the invention is to improve the state of the art.

Another purpose of the invention is to provide a tool for tire-changing machines that allows to remove and mount the tires from/onto the rims without requiring excessively high deformations of the beads.

A further purpose of the invention is to provide a tool for tire-changing machines that allows to remove and mount the tires from/onto the rims without danger of damaging the latter.

According to one aspect of the invention, a tool for tire-changing machines is provided, in accordance with the characteristics of claim 1.

According to another aspect of the invention, a tire-changing machine is provided, in accordance with the characteristics of claim 5.

The invention allows to obtain the following advantages:
- remove and mount tires from or onto the rims without causing excessive deformation of the beads;
- remove and mount tires from or onto the rims without damaging the latter.

### BRIEF DESCRIPTION OF THE DRAWINGS

Further features and advantages of the invention will become more evident from the detailed description of a preferred but not exclusive embodiment of a tool for tire-changing machines, shown by way of non-restrictive example in the accompanying drawings where:
FIG. 1 is a view of a tool for tire-changing machines according to the state of the art;
FIG. 2 is a view of a first embodiment of a tool for tire-changing machines, according to the invention;
FIG. 3 is an enlarged scale view of the tool in Fig. 2;
FIG. 4 is an interrupted view of a part of a tire-changing machine equipped with the tool according to the invention in an operational step;
FIG. 5 is a perspective view of a second possible embodiment of a tool for tire-changing machines according to the invention, in a step of removing a tire.

### DETAILED DESCRIPTION OF A PREFERRED EMBODIMENT.

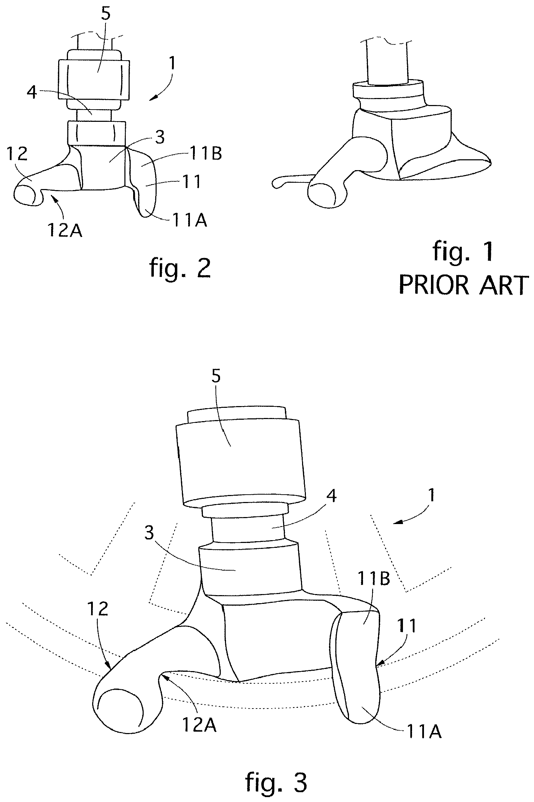

With reference to Figs. 2 and 3, a tool 1 for tire-changing machines 2 can be seen in a first embodiment.

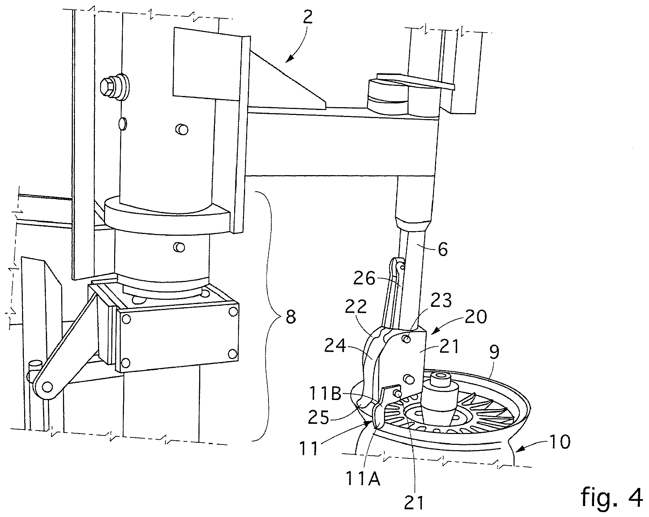

In this first version, the tool 1 has a monolithic body 3 that forms a tang 4 equipped with a joint 5 to a vertical rod 6 (known in technical jargon by the term post) of the tire-changing machine 2 (Fig. 4).

The rod 6 is in turn supported by a horizontal or substantially horizontal operating arm 7 of the tire-changing machine 2 which is equipped with a traversing movement in an ideal horizontal plane to move from a position of disengagement to a working position, and vice versa.

The tire-changing machine 2 is usually equipped with a rotating motorized platform, not visible in the drawings, which is known as a self-centering platform and which is supported horizontal or substantially horizontal, to a base of the tire-changing machine 2, also not visible in the drawings, from which a turret 8 rises which supports the operating arm 7 cantilevered.

The rotating platform is typically equipped with mechanical elements to grip and release an edge 9 of a rim 10 of a vehicle wheel when it is positioned on it and which are commanded by the tire specialist, generally by means of a suitable pedal command.

In the first embodiment of the tool 1, the body 3 forms two monolithic appendages which protrude from it and which respectively form a finger 11 and a feeler pin 12.

The finger 11 has an active portion 11A, intended to be inserted transversely between the edge 9 of the rim 10 and a bead 13 of a tire 14, and a joint portion 1 1B for attachment to the body 3.

The feeler pin 12 forms, in a lower zone facing toward a rim 10, a recess 12A which shapes a concave profile that can be mated with the convex external profile of the edge 9, in such a way that it rests precisely on the latter during the operations of the tire specialist to remove or mount a tire 14.

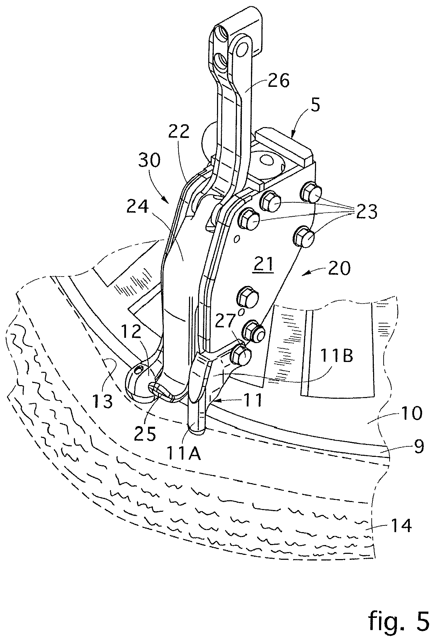

In a second embodiment, the tool for tire-changing machines 2 according to the invention visible in Figs. 4 and 5 and indicated in this case by 20, has a body 30 which is formed by the coupling of two parallel plates 21 and 22 which are fixed to each other and to the joint 5, for example by means of bolts and nuts 23, leaving an intermediate space in which a mobile pawl 24 is housed which has a hook 25 at one end considered lower, that is, facing toward the rim 10.

The mobile pawl 24 is driven by a drive lever 26 which connects it to an actuator (not visible in the drawings) which is associated with the rod 6 and which, by means of a command arm, moves it up and down and in roto-translation which allows the hook 25 to pass over the edge 9 of the rim 10 with a roto-translation movement without knocking it and to introduce itself between the latter and the bead 13 of the tire 14, hooking it.

Then, by lifting the mobile pawl 24, the bead 13 also rises and passes over the edge 9 at the point where the hook 25 is inserted, creating an opening in which the active portion 11A of the finger 11 can be inserted.

One of the two plates that form the body of the tool 20, in the case shown, the plate 21, supports in the lower zone the finger 11 which can be constrained to it by means of a bolt and a nut 27, or even monolithic.

In this case too, the finger 11 has an active portion 11A which faces toward the rim 10 and a portion 11B for attachment to the plate 21.

The active portion 11A of the finger 11 is wedged transversely between the edge 9 and the bead 13 when the latter is lifted by the pawl 24 and flexes the bead 13 slightly toward the outside.

The plate 22, parallel to the plate 21, supports the feeler pin 12 on the opposite side with respect to the pawl 24, and in this case too intended to be rested on the edge 9 of the rim 10 during the steps when a tire 14 is removed or mounted.

When the active portion 11A is inserted in the working position, that is, in the opening opened by the hook 25 of the pawl 24, the latter releases the bead 13 which remains slightly distanced from the edge 9, held toward the outside by the active portion 11A, however without surmounting the joint part 11B of the finger 11.

When this configuration is completed, the tire specialist makes the rotating platform rotate by rotating the wheel that is fixed on the latter.

During rotation, the active portion 11A progressively surmounts the bead 13 from the edge 9 for its entire circumference, making the tire 14 completely slack on the rim 10, so that the tire specialist can extract it completely from the latter with simple manual maneuvers.

To mount a tire 14 on the corresponding rim 10, the tire specialist fixes the rim 10 on the rotating platform and manually inserts the first lower bead of the loose tire 14 inside the central channel of the rim 10.

Subsequently, with the use of the operating arm 7 and the tool 20, he also inserts the upper bead, completing the mounting of the tire 14 on the rim 10.

In detail, to insert the upper bead, the tire specialist positions the active portion 11A of the finger 11 transversely between the edge 9 of the rim 10 and the bead of the tire 14 and, subsequently, makes the rotating platform rotate.

The finger 11, positioned transversely with respect to the edge of the rim, progressively meets the bead which is beyond the edge 9 of the rim 10 and pushes it by contrast towards the central channel of the latter.

When the rotation is complete for the entire circumference of the tire 14, the latter is mounted loosely, but completely, on the rim 10 and the tire specialist can proceed with the final inflation to restore the use of the wheel.

In practice it has been found that the invention achieves the intended purposes.

The invention as conceived is susceptible to modifications and variants, all of which fall within the inventive concept.

Furthermore, all the details can be replaced with other technically equivalent elements.

In practical implementation, any materials, as well as the shapes and sizes, may be used, depending on requirements, without thereby departing from the field of protection of the following claims.

## Claims

1. Tool (1; 20) for tire-changing machines (2) that has a body (3) that includes:
- a joint (5) to an operating end of an operating arm (7) of a tire-changing machine (2);
- a feeler pin (12) resting on one edge (9) of a rim (10) which is blocked with blocking means on a rotating platform of a tire-changing machine (2);
**characterized in that** said body (3) further comprises at least one finger (11) which protrudes towards said rotating platform and is intended to be operatively introduced transversely between an edge (9) of a rim (10) and a bead (13) of a tire (14) mounted or to be mounted on the rim (10).

2. The tool according to claim 1, wherein said finger (11) is fixed to said body (3) with fixing means (21, 22).

3. The tool according to claim 1, wherein said finger (11) is in a single piece with said body (3).

4. The tool according to any one of the preceding claims, wherein said finger (11) comprises an attachment portion (11B) to said body (3) and an active portion (11A) designed to be inserted transversely between said edge (9) of a rim (10) and bead (13) of a tire (14).

5. Tire-changing machine (2) **characterized in that** it comprises:
- a base;
- a rotating platform mounted on the base and provided with blocking means of a rim (10) of a wheel;
- an operating arm (7) associated with the base and facing the rotating platform and having an operating end equipped with removable joining means (5; 21, 22) of a tool, **characterized in that** it comprises a tool (1; 20) according to one or more of the preceding claims joined in a removable way to said joining means (5; 21,22).
